# EUROPÄISCHE PATENTANMELDUNG

(11) **EP 1 270 530 A1**
(43) Veröffentlichungstag der Anmeldung: **02.01.2003**
(21) Anmeldenummer: 01114928.3
(22) Anmeldetag: 20.06.2001
(51) Int. Cl.: C04B 24/26, C04B 11/00

(54) **Abbindeverzögerer für Gips**

(71) Anmelder: Cognis Iberia, S.L., 08755 Castellbisbal, (Barcelona) (ES)
(72) Erfinder: Tuduri, Jaime, 08190 Sanat Cugat del Vallès (ES); Rovira, Xavier, 08720 Vilafranca del Penedes (ES); Pi Subirana, rafael, 08400 Granollers (ES)
(74) Vertreter: Fabry, Bernd, Dr.

(57) **Zusammenfassung**

Vorgeschlagen wird ein Verfahren zur Verzögerung des Abbindens von Gips, welches sich dadurch auszeichnet, dass man als Verzögerungsmittel Copolymere der Acrylsäure mit
(a) Dipropylenglycoldiacrylat (DPGDA),
(b) Tripropylenglycoldiacrylat (TPGDA),
(c) Acrylamidomethylpropansulfonsäure (AMPS), und/oder
(d) Acrylsäureethylester (AE)
einsetzt.

## Beschreibung

### Gebiet der Erfindung

Die Erfindung befindet sich auf dem Gebiet der Gipsverarbeitung und betrifft ein verbessertes Verfahren zur Verzögerung des Abbindens von Gips sowie die Verwendung spezieller Polymere als Abbindeverzögerer.

### Stand der Technik

Im Baugewerbe und in der Bildhauerei werden große Mengen an Gipsmassen eingesetzt. Dabei wird gebrannter Gips oder Stuckgips entweder alleine oder in Mischung mit Kalk, Sand und Leichtzuschlagstoffen wie Perlit oder Cellulosederivate in größerem Umfang verwendet. Die Abbindezeit der Gipsmassen nach dem Anrühren mit Wasser ist jedoch relativ kurz, so dass eine schnelle Verarbeitung erfolgen muss. Eine Übersicht hierzu findet sich beispielsweise von Ruffer in **Keram. Ztg. 39(1), 13-15 (1987).**

In der Vergangenheit hat es nicht an Bemühungen gefehlt, die offene Zeit bei der Gipsverarbeitung durch Zugabe geeigneter Additive zu verlängern. So wird beispielsweise in der **DE-OS 2325738** (Henkel) vorgeschlagen, den Gipsmassen wasserlösliche Polymere auf Basis von ungesättigten Dicarbonsäuren zuzusetzen. Aus der Patentschrift **DE-PS 752194** (BASF) sind für diesen Zweck des weiteren basische Kondensationsprodukte von aliphatischen Aminosäuren mit Formaldehyd bekannt. Über ähnliche Stoffe wird des weiteren auch von Müller in **Zem.Kalk.Gips 27(2), 69-74 (1974)** berichtet. Die Stoffe sind jedoch nicht nur in Bezug auf ihre Verzögerungseigenschaften unzureichend, sondern zudem auch dunkel gefärbt und besitzen einen stechenden Geruch, was zusammen genommen ihren Einsatz für den beabsichtigten Zweck stark einschränkt. Des weiteren wird in der Europäischen Patentanmeldung **EP 0011581 A1** (Protex) vorgeschlagen, die offene Zeit durch Zusatz von Poly(meth)acrylaten oder Polyacrylaten mit Molekulargewichten unterhalb von 1.000 zu verbessern. Die mit diesen Produkten zu erzielenden Ergebnisse sind jedoch im Hinblick auf die offene Zeit nach wie vor nicht zufriedenstellend.

Die Aufgabe der vorliegenden Erfindung hat folglich darin bestanden, ein verbessertes Verfahren zur Verzögerung des Abbindens von Gips zur Verfügung zu stellen, bei dem die offene Zeit - insbesondere im Vergleich zu den Poly(meth)acrylaten und Polyacrylamiden des Stands der Technik - verbessert wird.

### Beschreibung der Erfindung

Gegenstand der Erfindung ist ein Verfahren zur Verzögerung des Abbindens von Gips, welches sich dadurch auszeichnet, dass man als Verzögerungsmittel Copolymere der Acrylsäure mit
(a) Dipropylenglycoldiacrylat (DPGDA),
(b) Tripropylenglycoldiacrylat (TPGDA),
(c) Acrylamidomethylpropansulfonsäure (AMPS), und/oder
(d) Acrylsäureethylester (AE)
einsetzt.

Überraschenderweise wurde gefunden, dass mit den genannten Copolymeren gegenüber den Produkten des Stands der Technik in der Gipsbearbeitung eine signifikant verbesserte Abbindeverzögerung erzielt wird.

### Polymere Abbindeverzögerer

Die Copolymeren auf Acrylsäurebasis stellen bekannte Stoffe des Stands der Technik dar und werden beispielsweise als Verdickungsmittel in der Kosmetik oder zur Wasseraufbereitung eingesetzt. Stellvertretend für die umfangreiche Patentliteratur auf diesem Gebiet sei auf die **US 4,554,307** (Allied Colloids) verwiesen. Vorzugsweise werden Copolymere der Acrylsäure mit den Komponenten (a) und/oder (b) eingesetzt. Einiges spricht dafür, dass die vorteilhaften Eigenschaften darauf zurückzuführen sind, dass die erfindungsgemäß einzusetzenden Polymeren dreidimensional vernetzt sind. Das Gewichtsverhältnis Acrylsäure : Comonomer kann 90 : 10 bis 99 : 1 betragen, typischerweise beträgt der Anteil der Comonomeren 2 bis 6 und insbesondere 3 bis 5 Gew.-%. Die Herstellung der Polymere kann dabei in an sich bekannter Weise erfolgen, also beispielsweise indem man die Monomeren zusammen mit einem Starter (z.B. Wasserstoffperoxid, Natriumpersulfat, Ammoniumpersulfat) und einem Reduktions- bzw. Kettenübertragungsmittel (z.B. Thioglycolsäure, Butylmercaptan) vorlegt und dann unter Beachtung der stark exothermen Reaktion abreagieren lässt, unter Zusatz von Basen in den schwach alkalischen Bereich (pH 7,5 bis 8) bringt und mit Wasser auf die gewünschte Anwendungskonzentration, beispielsweise 30 bis 60 und insbesondere um 40 Gew.-% einstellt. Das Molekulargewicht der Polymere liegt typisch im Bereich von 2.000 bis 20.000, vorzugsweise 3.000 bis 10.000 und insbesondere um 5.000 Dalton. Dispersionen mit einem Feststoffgehalt von ca. 40 Gew.-% und weisen in der Regel Brookfield-Viskositäten (20 °C, Spindel 1, 10 Upm) von 300 bis 550 mPas auf. Anstelle der wässrigen Dispersionen können in gleicher Weise auch wasserfreie Pulver eingesetzt werden. Zu diesem Zweck kann man die Dispersionen beispielsweise durch Adsorbieren an Trägern, wie beispielweise Silica oder Aluminiumoxid entwässern. Auf diese Weise entstehen Zubereitungen, welche 50 bis 90 Gew.-% Polymere und 10 bis 50 Gew.-% Träger enthalten. Die Einsatzmenge der Polymeren kann bezogen auf die Menge Gips - 0,01 bis 5 und vorzugsweise 0,05 bis 1 Gew.-% betragen.

### Gewerbliche Anwendbarkeit

Ein weiterer Gegenstand der Erfindung betrifft schließlich die Verwendung von Copolymere der Acrylsäure mit
(a) Dipropylenglycoldiacrylat (DPGDA),
(b) Tripropylenglycoldiacrylat (TPGDA),
(c) Acrylamidomethylpropansulfonsäure (AMPS), und/oder
(d) Acrylsäureethylester (AE)
als Abbindeverzögerer für Gips, dem die Stoffe vorzugsweise in Mengen von 0,01 bis 5 und insbesondere 0,05 bis 1 Gew.-% zugesetzt werden.

### Beispiele

**Beispiel H1.** In einem Polymerisationsreaktor wurden 25,2 g Acrylsäure, 1,6 g Dipropylen-glycoldiacrylat (DPGDA) und 41,2 g Wasser vorgelegt und auf 10 °C gekühlt. Dann wurden unter starkem Rühren 1 g Ammoniumpersulfat in 1,6 g Wasser sowie 5,2 g Natriummetabisulfit in 13,1 g Wasser hinzugegeben. Innerhalb von 30 min stieg die Reaktion bis auf 105 °C an. Nachdem ein langsames Absinken anzeigte, dass die Reaktion abgeschlossen war, wurde mit wässriger Natriumhydroxidlösung auf pH 7,8 eingestellt und Wasser zugegeben, so dass eine milchig-weiße Dispersion mit einem Feststoffgehalt von 40 Gew.-% resultierte. Anschließend wurde die Dispersion durch Zugabe von Silica getrocknet, wobei ein weißes Pulver mit einem Polymergehalt von 60 Gew.-% und einer Dichte von 0,8 g/cm³ erhalten wurde.

**Beispiel H2.** In einem Polymerisationsreaktor wurden 25,4 g Acrylsäure, 0,8 g Tripropylen-glycoldiacrylat (TPGDA) und 41,2 g Wasser vorgelegt und auf 10 °C gekühlt. Dann wurden unter starkem Rühren 1 g Ammoniumpersulfat in 1,6 g Wasser sowie 5,2 g Natriummetabisulfit in 13,1 g Wasser hinzugegeben. Innerhalb von 30 min stieg die Reaktion bis auf 105 °C an. Nachdem ein langsames Absinken anzeigte, dass die Reaktion abgeschlossen war, wurde mit wässriger Natriumhydroxidlösung auf pH 7,8 eingestellt und Wasser zugegeben, so dass eine milchig-weiße Dispersion mit einem Feststoffgehalt von 40 Gew.-% resultierte. Anschließend wurde die Dispersion durch Zugabe von Silica getrocknet, wobei ein weißes Pulver mit einem Polymergehalt von 65 Gew.-% und einer Dichte von 0,9 g/cm³ erhalten wurde.

**Beispiel H3.** In einem Polymerisationsreaktor wurden 300 g Wasser vorgelegt, auf 100 °C erhitzt und dann 30 min Stickstoff gespült. Anschließend wurden 272 g einer Mischung aus Acrylsäure und Methacrylsäure im Molverhältnis 1:1 sowie 48 g Acrylamidomethylpropansulfonsäure (AMPA) hinzugegeben. Unter starkem Rühren wurden innerhalb von 4 h 9,8 g Wasserstoffperoxid, 28 g Thioglycolsäure und 100 g Wasser hinzugegeben. Die Mischung wurde weitere 2 h bei 100 °C gerührt, dann abgekühlt, mit wässriger Natriumhydroxidlösung auf pH 7,5 eingestellt und mit Wasser verdünnt, so dass wiederum eine Dispersion mit einem Feststoffgehalt von etwa 40 Gew.-% resultierte. Das durchschnittliche Molekulargewicht des Polymers betrug 2.800. Anschließend wurde die Dispersion durch Zugabe von Silica getrocknet, wobei ein weißes Pulver mit einem Polymergehalt von 90 Gew.-% und einer Dichte von 0,8 g/cm³ erhalten wurde.

**Beispiel H4.** In einem Polymerisationsreaktor wurden 350 g Wasser vorgelegt, auf 85 °C erhitzt und dann 30 min Stickstoff gespült. Anschließend wurden 358 g Acrylsäure und 40 g Acrylsäureethylester hinzugegeben. Unter starkem Rühren wurden innerhalb von 2 h 9,8 g Wasserstoffperoxid, 12,5 g Propylmercaptat und 120 g Wasser hinzugegeben. Die Mischung wurde eine weitere h bei 85 °C gerührt, dann abgekühlt, mit wässriger Natriumhydroxidlösung auf pH 7,5 eingestellt und mit Wasser verdünnt, so dass wiederum eine Dispersion mit einem Feststoffgehalt von etwa 40 Gew.-% resultierte. Das durchschnittliche Molekulargewicht des Polymers betrug 4.000. Anschließend wurde die Dispersion durch Zugabe von Silica getrocknet, wobei ein weißes Pulver mit einem Polymergehalt von 80 Gew.-% und einer Dichte von 0,85 g/cm³ erhalten wurde.

**Anwendungstechnische Untersuchungen.** Zur Untersuchung der Abbindeverzögerung wurden jeweils 250 g Stuckgips und 250 ml Wasser als Testmenge verwendet und mit 0,15 g der Zusatzstoffe (jeweils bezogen auf den Polymergehalt) versetzt. Als Abbindezeit wurde der Zeitraum angegeben, in dem der Gips gut streichfähig und leicht zu verarbeiten war. Die Beispiele 1 und 2 sind erfindungsgemäß die Beispiele V1 bis V3 dienen zum Vergleich.

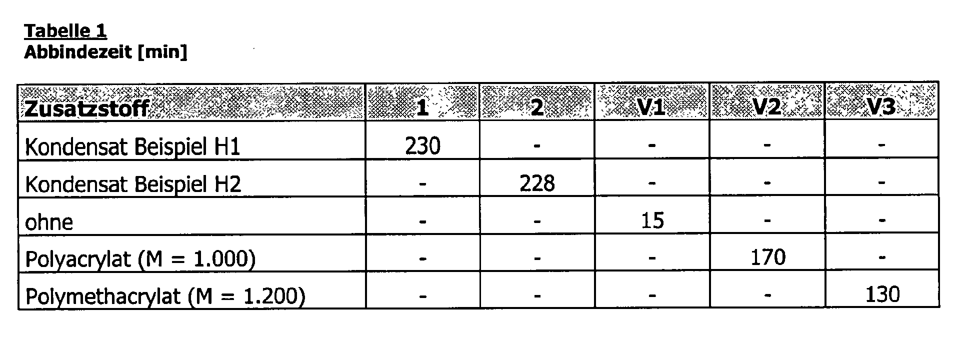

## Patentansprüche

1. Verfahren zur Verzögerung des Abbindens von Gips, **dadurch gekennzeichnet, dass** man als Verzögerungsmittel Copolymere der Acrylsäure mit
(a) Dipropylenglycoldiacrylat (DPGDA),
(b) Tripropylenglycoldiacrylat (TPGDA),
(c) Acrylamidomethylpropansulfonsäure (AMPS), und/oder
(d) Acrylsäureethylester (AE)
einsetzt.

2. Verfahren nach Anspruch 1, **dadurch gekennzeichnet, dass** man Polymere einsetzt, bei denen das Gewichtsverhältnis Acrylsäure zu Comonomer 99 : 1 bis 90 : 10 beträgt.

3. Verfahren nach den Ansprüchen 1 und/oder 2, **dadurch gekennzeichnet, dass** man Copolymere einsetzt, die ein durchschnittliches Molekulargewicht von 2.000 bis 20.000 Dalton aufweisen.

4. Verfahren nach mindestens einem der Ansprüche 1 bis 3, **dadurch gekennzeichnet, dass** man die Copolymere in Form wässriger Dispersionen einsetzt.

5. Verfahren nach Anspruch 4, **dadurch gekennzeichnet, dass** man wässrige Polymerdispersionen einsetzt, die einen Feststoffgehalt von 30 bis 60 Gew.-% aufweisen.

6. Verfahren nach mindestens einem der Ansprüche 1 bis 3, **dadurch gekennzeichnet, dass** man die Copolymere in Form wasserfreier Pulver einsetzt.

7. Verfahren nach Anspruch 6, **dadurch gekennzeichnet, dass** man wasserfreie Pulver einsetzt, die durch Adsorption der wässrigen Polymerdispersionen an Trägern erhältlich sind.

8. Verfahren nach Anspruch 7, **dadurch gekennzeichnet, dass** man wasserfreie Pulver einsetzt, die 50 bis 90 Gew.-% Polymere und 10 bis 50 Gew.-% Träger enthalten.

9. Verfahren nach mindestens einem der Ansprüche 1 bis 8, **dadurch gekennzeichnet, dass** man die Copolymeren in Mengen von 0,01 bis 5 Gew.-% - bezogen auf die Menge Gips - einsetzt.

10. Verwendung von Copolymeren der Acrylsäure mit
(a) Dipropylenglycoldiacrylat (DPGDA),
(b) Tripropylenglycoldiacrylat (TPGDA),
(c) Acrylamidomethylpropansulfonsäure (AMPS), und/oder
(d) Acrylsäureethylester (AE)
als Abbindeverzögerer für Gips.
